Europäisches Patentamt

**European Patent Office**

**Office européen des brevets**

(11) Publication number : **0 577 386 A2**

(12) **EUROPEAN PATENT APPLICATION**

(21) Application number : 93305073.4

(22) Date of filing : 29.06.93

(51) Int. Cl.⁵ : **G01D 5/26**

(30) Priority : **02.07.92 GB 9214070**

(43) Date of publication of application :
**05.01.94 Bulletin 94/01**

(84) Designated Contracting States :
**CH DE FR GB LI NL**

(71) Applicant : **LUCAS INDUSTRIES public limited company**
**Brueton House New Road**
**Solihull, West Midlands B91 3TX (GB)**

(72) Inventor : **Jones, Roger Edward**
**1 Finchers Corner**
**Cradley, Malvern, WR 13 5LP (GB)**

(74) Representative : **Robinson, John Stuart et al**
**Marks & Clerk Alpha Tower Suffolk Street**
**Queensway**
**Birmingham, B1 1TT (GB)**

(54) **Measurement apparatus.**

(57)   A measurement apparatus comprises a Fabry-Perot interferometer (10) illuminated by a polychromatic light source (52). Light reflected from a vibrating bridge (2) of the interferometer (10) is supplied to three photodetectors (53) having different spectral responses. The outputs of the photodetectors (53) are supplied to a processor (54) which forms first and second quotients whose numerators are proportional to the outputs of the first and second detectors, respectively, and whose denominators are equal to the sum of the outputs of the detectors (53). The processor (54) derives a measurant as the spectral distribution derived from the first and second quotients.

FIG.5.

The present invention relates to a measurement apparatus.

Measurements may be required to be made in environments unsuitable for electronic sensors, perhaps because of large pressures, elevated temperatures or electromagnetic interference. It is known that micromachined silicon resonators can be used in conjunction with optical fibres to provide sensors in which the processing electronics can be sited remotely from the measurement site.

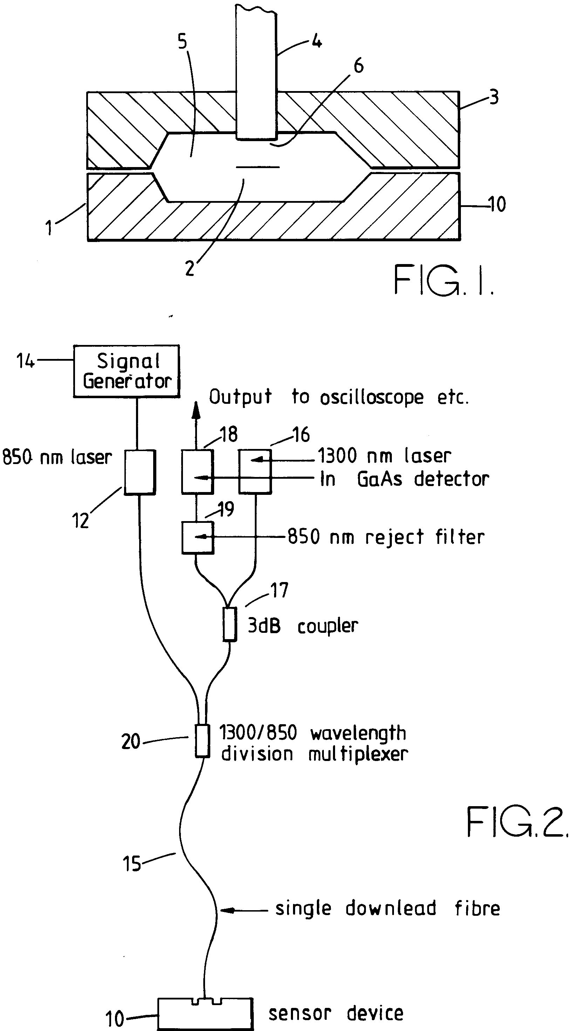

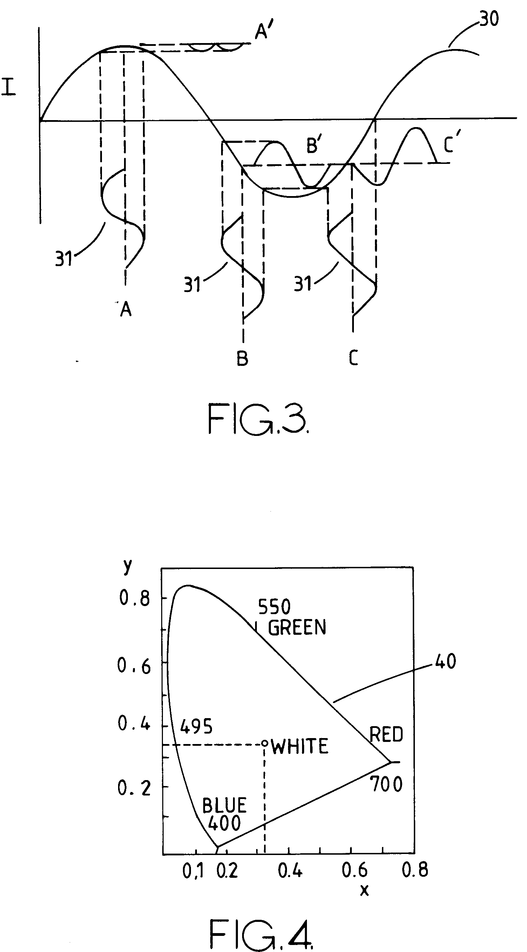

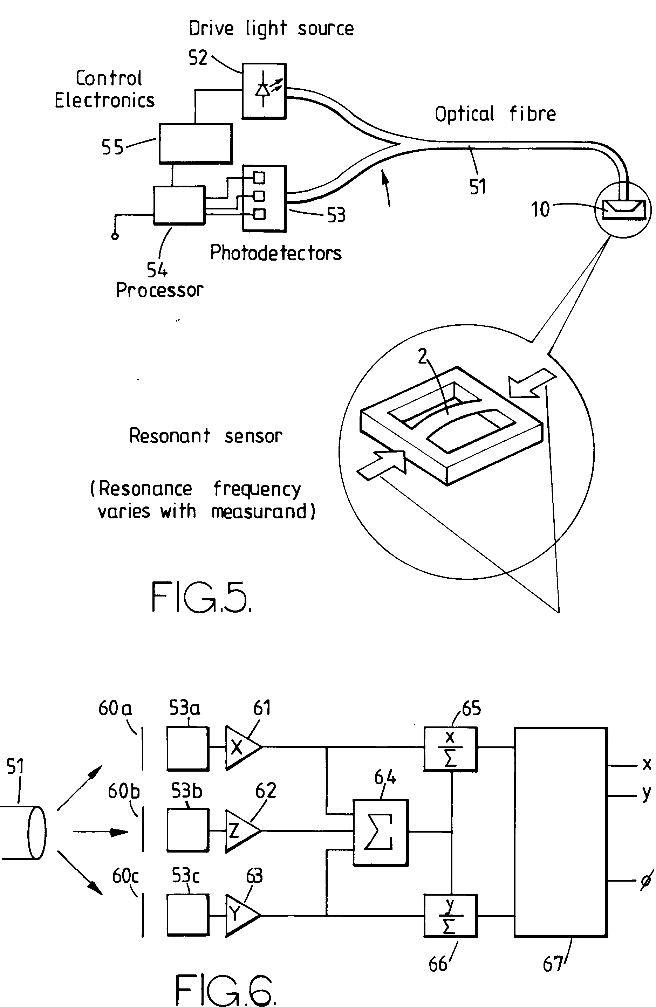

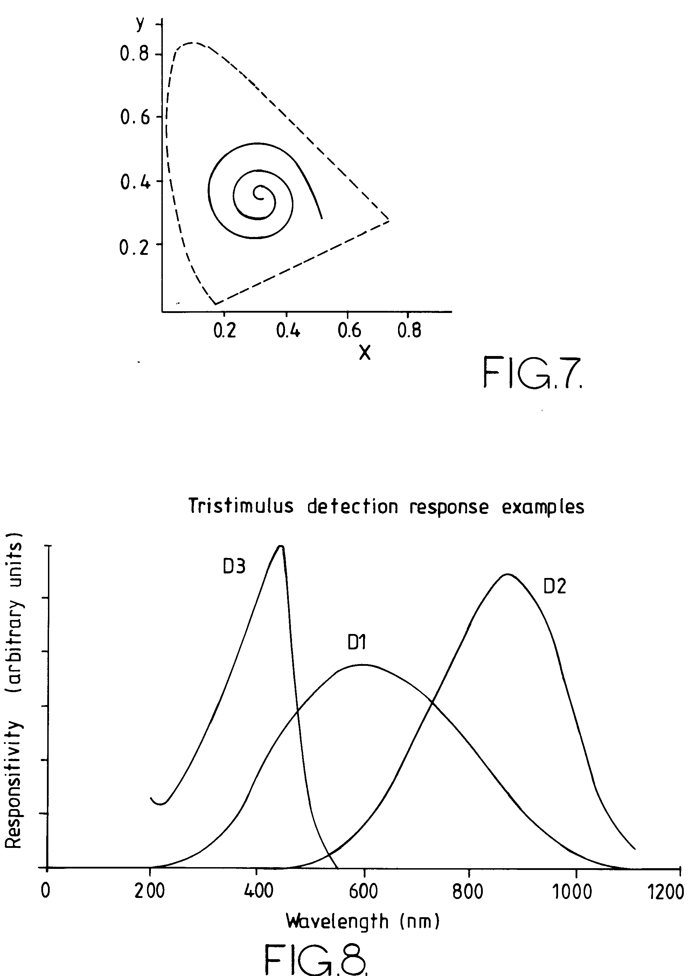

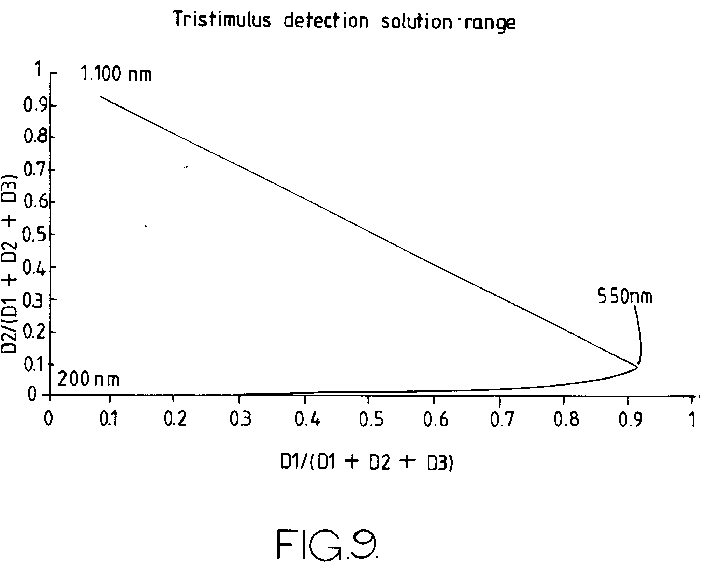

Jones et al, "Optical-fibre sensors using micromachined silicon resonant elements", IEE Proceedings, Vol 135, Pt.D, No 5, September 1988 describe a measurement system, reproduced in Figure 2 of the accompanying drawings, using a sensor 10 comprising a resonant element 2 forming an optical element within a Fabry-Perot interferometer. A schematic representation of the sensor 10 is shown in Figure 1 of the accompanying drawings. The resonant element 2 is driven by a pulsed laser diode 12 controlled by a signal generator 14. The amplitude of the oscillation of the resonant element is typically less than 100 nanometres. Light from the laser 12 is carried to the sensor 10 along an optical fibre 15. A continuous light source 16, producing a measurement light of different wavelength from that produced by the laser diode 12, also illuminates the resonant element 2 within the sensor 10. The measurement light is used for the measurement of the motion of the element 2. Interference between two different light paths of differing lengths for the measurement light, as hereinafter described, modulates the intensity of the measurement light reflected from the sensor 10 in response to the position of the element 2. The modulated measurement light is detected by a detector 18 to give an indication of movement of the element 2. A reject filter 19 attenuates the light from the laser diode 12 which might otherwise reach the detector 18 by virtue of a path through a wavelength division multiplexer 20 and signal splitter 17 within the optical fibre 15.

The use of a monochromatic light source can result in some undesirable problems. Figure 3 of the accompanying drawings shows a response characteristic 30 for an interferometric sensor illuminated by monochromatic light. Light intensity, I, is plotted along the ordinate and the separation of the optical elements, D, is plotted along the abscissa. A small amplitude vibration represented by a sinusoid 31 is shown for three initial separations A,B, and C of the optical elements of the interferometer. The output of the sensor 10 is represented by A',B', and C' for the same vibration 31 occurring about initial positions A, B, and C, respectively. The output signal can be seen to be dependent upon the initial position, that is the distance D between the element 2 and the end 6 of the optical fibre 4 as shown in Figure 1. For optimum operation of the sensor 10, the spacing, D, should be an integral number of eighths of a wavelength of the measurement light. This requirement imposes strict manufacturing tolerances.

The distance D may become altered by pressure applied to the casing of the sensor 10 or by thermal expansion. It is therefore possible that a resonant sensor using monochromatic illumination might move to a disadvantageous operating point along its characteristic curve 30. A loss of output signal may result for position A, whilst the phase change between positions B and C may disrupt the operation of a closed loop matching the frequency of the pulsed laser 12 to the resonant frequency of the element 2.

According to the present invention, there is provided a measurement apparatus characterised by comprising: a wavelength encoding sensor; first, second, and third photodetectors having first, second and third spectral responses, respectively, and being arranged to receive energy from the wavelength encoding sensor; and processing means for processing first, second, and third outputs of the first, second, and third photodetectors, respectively, to provide first and second quotients having first and second numerators and first and second denominators, respectively, the first and second numerators being proportional to the first and second outputs, respectively, and each of the first and second denominators including contributions from the first, second, and third outputs.

Preferably the energy is electromagnetic radiation in the from of light. The term "light", as used herein, includes electromagnetic radiation from the visible region of the electromagnetic spectrum and from adjacent regions of the spectrum and explicitly includes the infra-red region of the electromagnetic spectrum.

Preferably the wavelength encoding sensor is illuminated with first, second and third wavelengths of light falling within the spectral responses of the first, second and third photodetectors. Advantageously the wavelength encoding sensor is illuminated with a broadband light source having an emission spectrum extending into the visible and infra-red regions of the spectrum. The light source may comprise a light emitting diode.

The wavelength encoding sensor may be a coloured filter, diffraction grating or prism movable with respect to a light path to change the spectral distribution of the light passing along the light path. Preferably the wavelength encoding sensor is an interferometer, such as a Fabry-Perot interferometer, in which relative movement of components within the interferometer alters the spectral distribution of light therefrom when illuminated by polychromatic light.

The wavelength encoding sensor preferably includes an element which is part of the interferometer and whose position is dependent upon a parameter, such as force, tension, temperature or pressure, applied to a whole or part of the wavelength encoding sensor. Preferably the wavelength encoding sensor includes a vibrating element which forms part of the wavelength encoding sensor and whose frequency of vibration is dependent upon a parameter, such as force, tension, temperature or pressure, applied to a whole or part of the wavelength encoding sensor. The vibrating element may be caused to resonate by a modulated electrostatic force or by auto-oscillation in a light beam. Alternatively the resonating element may be caused to oscillate by irradiation with amplitude modulated light.

Light may enter and exit the wavelength encoding sensor along different paths. Preferably light enters and exits the wavelength encoding sensor along a single path. Preferably the or each light path is defined by an optical fibre.

Any one or more of the photodetectors may have respective optical response modifying means. Preferably the or each optical response modifying means is an optical filter, for example formed of coloured translucent material. Furthermore one or more of the photodetectors may be formed of different materials having different spectral responses, or may have different geometries conferring different spectral responses.

Preferably the processing means is a dedicated electronic circuit, such as a circuit using analogue components. The output from a photodetector may be scaled to compensate for variations in photodetector efficiency or variations in intensity of light due to the inclusion of optical response modifying means.

Preferably a first quotient is formed by dividing the output from the first photodetector by a sum of the outputs of the photodetectors.

Preferably a second quotient is formed by dividing the output from the second photodetector by a sum of the outputs of the photodetectors.

In one embodiment, one of the first, second and third photodetectors may be substantially responsive to red light, another photodetector may be substantially responsive to green light and the remaining photodetector may be substantially responsive to blue light.

In a second embodiment, one of the first, second and third photodetectors may have a response characteristic substantially centred around 600nm, another photodetector may have a response characteristic substantially centred around 850nm and the remaining photodetector may have a response characteristic substantially centred around 450nm.

The spectral responses of the photodetectors may be quite broad and may overlap.

Preferably the first and second quotients are used to provide a determination of the spectral distribution of the light from the wavelength encoding sensor. The first and second quotients may be used to define a point on a mapping diagram having the first and second quotients as the coordinate axes. Additionally or alternatively the first and second quotients may be used to generate or look up a variable representative of a measurand. The first and second quotients may be used to generate a signal representing a polar angle to a point on the mapping diagram representing the spectral content of the light at the photodetectors from a predetermined point of the mapping diagram. The predetermined point may be the origin of the diagram, or any other convenient point on the diagram.

The mapping diagram can be referred to as a chromaticity diagram when the spectral responses of the photodetectors lie solely within the visible spectrum. Then the spectral distribution of the light may be referred to as the colour of the light. The terms "chromaticity diagram" and "colour" cease to be appropriate once the wavelengths used extend outside the range of human colour vision.

The wavelength encoding sensor may also be referred to as a chromatic encoding sensor, especially when the illumination falls within the visible region of light.

It is thus possible to provide a measurement apparatus suitable for use in hostile or hazardous environments. The wavelength encoding sensor can have a robust construction. Furthermore no electricity is supplied to the sensor, making the sensor suitable for use in explosive or harsh environments. The photodetectors and processing electronics can be located remotely from the sensor. The measurement of spectral distribution (analogous to colour) is substantially unaffected by variations of light intensity, thereby enabling simpler light sources to be used.

The present invention will further be described, by way of example, with reference to the accompanying drawings, in which:

Figure 1 is a schematic representation of a sensor incorporating an interferometer;

Figure 2 is a schematic diagram of a known measurement system using an interferometer as a sensor;

Figure 3 is a graph showing variations in the response of the sensor of Figure 2 dependent upon the spacing of the optically active elements therein;

Figure 4 is a mapping diagram for visible light and may be referred to as a chromaticity diagram;

Figure 5 is a schematic diagram of an embodiment of the present invention;

Figure 6 is a schematic diagram of an embodiment of a processing circuit suitable for use with the embodiment shown in Figure 5;

Figure 7 is an example of a transfer function of the embodiment shown in Figure 5;

Figure 8 is a graph of photodetector response versus wavelength for three photodetectors suitable for use in an embodiment of the present invention able to detect light in the visible and infra-red regions of the spectrum; and

Figure 9 is a mapping diagram for an embodiment of the present invention using the photodetectors having the response shown in Figure 8.

The sensor 10 shown in Figure 1 forms a Fabry-Perot interferometer. A first housing 1 supports an element 2, for instance at opposing ends thereof (as shown in the insert of Figure 5). The element 2 is free to vibrate. The frequency of vibration is dependent upon the tension of the element 2, which in turn is related to the pressure, force, temperature or tension applied to the first housing 1. A second housing 3 cooperates with the first housing 1 so as to form a sealed enclosure 5 around the element 2. The element 2 is thereby protected from the environment and, for instance, from moisture, chemical attack, and mechanical damage. The enclosure 5 is evacuated to substantially eliminate viscous damping of the element 2 by gas within the enclosure. The second housing 3 also provides a support for an optical fibre 4. The end surface 6 of the optical fibre 4 is held substantially parallel to the element 2. The element 2 has a reflecting surface facing the end surface 6 of the optical fibre 4. The sensor 10 may be a micromachined silicon sensor. Such sensors offer a compact design, good resolution and vary little with age.

Light travels along the optical fibre towards the end surface 6. Some of the light reaching the end surface 6 will reflect from the end surface 6, back along the fibre 4. The remainder of the light will exit form the fibre 4 and travel across the gap, D, towards the element 2. Light is reflected from the element 2. The light travels back across the gap, D, and re-enters the optical fibre 4.

The light reflected from the element 2 travels a distance 2D further than the light reflected from the end surface 6 of the optical fibre 4. The extra distance travelled gives rise to a phase change and consequently interference occurs.

It is known that, when interference is observed in monochromatic light, a series of interference fringes occurs. The condition for constructive interference is that the phase change between the interfering beams of light should be an integer multiple of the wavelength of the light. For the Fabry-Perot interferometer of Figure 1 the condition for constructive interference, allowing for a phase change of $\pi$ radians occurring with the reflection from the element 2, is:

$$2D = (m + \tfrac{1}{2})\lambda \quad (1)$$

where $\lambda$ is the wavelength of the light, and
m is an integer (0,1,2,3...).

For visible light, the colour of the light is dependent upon the wavelength of the light or the mixture of differing wavelengths and the relative intensities thereof. The spacing D that gives constructive interference for light of a first wavelength will not necessarily give constructive interference for light of a second wavelength. Thus if the sensor of Figure 1 is illuminated with polychromatic light, for instance white light, the light reflected from the cell will appear coloured. Furthermore the colour of the reflected light will change as the distance D changes. The spectral distribution of light in neighbouring regions of the spectrum will also be modified. The term "colour" ceases to be appropriate if a photodetector has a response extending outside of the region of human colour vision.

The use of polychromatic light source overcomes the problems associated with use of a monochromatic source. The operating point will not move to a disadvantageous point, such as indicated by position A in Figure 3, due to changes of the separation D. Although the operating point may be near the turning points in the response curves for some wavelengths, thereby giving little change in intensity for movement of the element 2, the intensities of other wavelengths will be significantly changed by movement of the element 2.

The use of polychromatic light precludes the use of techniques counting interference fringes to measure movement of the element 2. The output of the sensor 10 is wavelength encoded rather than intensity encoded.

A chromaticity diagram is shown in Figure 4. The chromaticity diagram is a special case of a more general mapping diagram. The chromaticity diagram allows a quantative definition of colour to be achieved. Colours are represented by a position on the diagram, expressed by two coordinates constrained to lie between zero and unity. The pure spectral colours lie on the "horse shoe" curve 40. The colours produced by a mixture of the pure spectral colours lie within the curve 40. White, for example, is represented by the coordinates (0.33,0.33).

A mapping diagram, analogous to the chromaticity diagram, but including wavelengths outside the range of human colour vision, is shown in Figure 9. The mapping diagram shown maps, onto a two-dimensional plane, the spectral response of a measurement apparatus using photodetectors having the response characteristics shown in Figure 8.

The coordinates on the mapping or chromaticity diagrams can be calculated, for a measurement system utilising three sensors, from the equations:

$$x = X / (X + Y + Z) \quad (2)$$
$$y = Y / (X + Y + Z) \quad (3)$$

where

$$X = \int \lambda\, P(\lambda)\, \overline{x}(\lambda)\, d\lambda \quad (4)$$
$$Y = \int \lambda\, P(\lambda)\, \overline{y}(\lambda)\, d\lambda \quad (5)$$
$$Z = \int \lambda\, P(\lambda)\, \overline{z}(\lambda)\, d\lambda \quad (6)$$

$\lambda$ represents wavelength,
$P(\lambda)$ is the power density as a function of wavelength, and
$\overline{x}(\lambda)$, $\overline{y}(\lambda)$, and $\overline{z}(\lambda)$ are matching functions dependent upon the response of the photodetectors;
as described in EP 0 224 994.

Figure 5 shows a schematic diagram of a measurement apparatus having a wavelength encoding sensor in the form of a resonating element within a Fabry-Perot cavity. A sensor 10, of the type shown in Figure 1, is connected via an optical fibre 51 to a light source 52 and three photodetectors 53. The outputs of the photodetectors 53 are supplied to a processor 54. A controller 55 for the light source 52 is connected to the processor 54 to receive signals in order to pulse the light source 52 at a suitable frequency to drive the sensor 10. The light source 52 is a polychromatic source having a wide spectrum of light emission, for example, a light emitting diode.

As described hereinbefore, the sensor 10 has an element 2 whose frequency of vibration is dependent upon the forces acting on the sensor 10. The light source 52 is modulated at the resonant frequency of the element 2 so as to drive the element 2. As the intensity of the light source is increased, the light falling on the surface of the element 2 facing the fibre 10 causes that surface to expand due to local heating. The opposing surface of the element 2 does not receive the light and consequently is not heated. The differential expansion causes the element to flex. When the intensity of the light falling on the illuminated surface of the element 2 is reduced, the surface cools and the element 2 returns towards its original position. The element 2 can thereby be caused to vibrate. It is desirable that the light source is modulated at or near the resonant frequency of the element 2, thereby inducing vibrations having an increased amplitude. A modulation index of less than 100 percent is used so that the element is always illuminated to some extent. Measurements can then be made continuously in an apparatus employing a single light source.

Light reflected from the sensor 10, and wavelength-modulated thereby, travels along the optical fibre 51 to the photodetectors 53. The three photodetectors have differing spectral responses. In a first embodiment, a first photodetector responds mainly to light at the red part of the spectrum, a second photodetector responds mainly to light in the green part of the spectrum and the final photodetector responds predominantly to light at the blue part of the spectrum. The spectral responses of the photodetectors may be quite broad and may overlap to some extent.

In a second embodiment, the first, second and third photodetectors have the responses indicated by D1, D2 and D3 of Figure 8, respectively.

The outputs of the photodetectors are processed by the processor 54 to provide a unique determination of the spectral distribution of the light reflected from the sensor 10. The processor can represent the spectral distribution as cartesian co-ordinates on the mapping or chromaticity diagrams. Alternatively the processor may represent the spectral distribution in terms of polar coordinates referenced to a predetermined point on the mapping or chromaticity diagrams. Additionally the processor 54 may provide an output representative of the movement of the element 2 to enable the controller 55 to drive the light source 52 at the correct frequency and phase to maintain resonance of the element 2.

A more detailed schematic representation of the photodetectors and an embodiment of a processor is shown in Figure 6. Light emerging from the optical fibre 51, falls on the three photodetectors 53a, 53b, and 53c. The photodetectors have differing spectral response characteristics. This may be achieved by using different types of photodetectors, by interposing filters 60a, 60b, and 60c between the optical fibre 51 and the photodetectors 53a-c, or by a combination of the above. For example, the response curves D1 and D2 of Figure 8 are obtained from a PD150 photodetector and D3 is obtained from a G1961 photodetector.

The output of the photodetector 53a is connected to an input of a first amplifier 61. The output of the photodetector 53b is connected to an input of a second amplifier 62. The output of the photodetector 53c is connected to an input of a third amplifier 63. An output of the first amplifier 61 is connected to a first input of a first quotient generator 65 and to a first input of a summer 64. An output of the second amplifier 62 is connected to a second input of the summer 64. An output of the third amplifier 63 is connected to a first input of a second quotient generator 66 and to a third input of the summer 64. An output of the summer 64 is connected to a second input of the first quotient generator 65 and to a second input of the second quotient generator 66. An output of the first quotient generator 65 is connected to a first input of a mapping device 67. An output of the second quotient generator 66 is connected to a second input of the mapping device 67.

The photodetectors 53a-53c, in combination with their respective filters 60a-60c, produce outputs corresponding to the variables X, Y and Z as defined hereinbefore in equations 4, 5 and 6. The respective amplifiers 61 to 63 provide buffering of the outputs of the photodetectors 53a-53c. The amplifiers can also be used to correct for variations in the sensitivity of the photodetectors. The summer 64 sums the signals from the outputs of the amplifiers. The output of the summer is used by the quotient generators as a divisor. Two of the photodetectors are used to provide dividends to the quotient generators. In the first embodiment, the photodetectors substantially responsive to red and green light respectively are used to provide the dividends to the quotient generators. The outputs of the quotient generators are then used by the mapping device 67 to generate the coordinates on the chromaticity diagram. Careful choice of the respective photodetector and filter combinations 53 and 60 may reduce the complexity of the mapping function required.

In the second embodiment, photodetectors having the responses D1 and D2 are used to provide the dividends to the quotient generators. The outputs of the quotient generators are then used by the mapping device 67 to generate the coordinates on the mapping diagram.

The resonating sensor provides an output in which a measurand is represented by a frequency. In such systems it is not always necessary to accurately know the colour or spectral distribution of the light reflected from the sensor 10. It may be sufficient to derive a signal representative of how the spectral distribution changes without actually knowing the spectral distribution itself. This can be achieved by converting the position of the spectral distribution or colour on the mapping or chromaticity diagrams, respectively, to a polar representation, for example an angle, 8, measured from a predefined point on the mapping or chromaticity diagrams. The predefined point could for example be the origin (0,0) or a wavelength corresponding to the central wavelength in the spectrum of the polychromatic light source. Conversion to polar coordinates can be performed quickly by the use of commercially available trigonometric processor integrated circuits such as arctan generators. The outputs of the quotient generators may be connected directly to respective inputs of the arctan generator, thereby referencing the angle θ to the origin of the mapping or chromaticity diagrams. Alternatively level shifting components may be used to move the point from which the polar angle is measured to any chosen position on the mapping or chromaticity diagrams.

The use of a trigonometric processor allows a single signal having a frequency equal to the frequency of vibration of the resonant sensor to be easily generated. The conversion to a single frequency encoded signal allows data relating to the vibration of the element 2 to be extracted whilst rejecting data about the quiescent position of the element 2.

A plot of an interferometer transfer function on a chromaticity diagram for polychromatic illumination results in a spiral line as illustrated in Figure 7. The phase angle 8 undergoes a substantially monotonic change with displacement of the element 2. A similar result would be obtained if the transfer function was plotted onto a mapping diagram.

The configuration of photodetectors and processor provides a measurement of spectral distribution, or where applicable colour, which is substantially independent of the intensity of the light incident upon the photodetectors. The apparatus as a whole combines the advantages of relative insensitivity to the intensity of the reflected light from the sensor 10 with the advantages of polychromatic illumination of the sensor thereby providing a well behaved sensor response characteristic.

## Claims

1. A measurement apparatus characterised by comprising: a Fabry-Perot interferometer sensor (10); first, second and third photodetectors (53a, 53b, 53c) having first, second, and third spectral responses (D1, D2, D3), respectively, and being arranged to receive energy from the sensor (10); and processing means (54, 61-67) for processing first, second, and third outputs of the first, second, and third photodetectors (53a, 53b, 53c), respectively, to provide first and second quotients having first and second numerators and first and second denominators, respectively, the first and second numerators being proportional to the first and second outputs, respectively, and each of the first and second denominators including contributions from the first, second and third outputs.

2. An apparatus as claimed in Claim 1, characterised by a radiation source (52) for irradiating the sensor (10) with radiation having components within the first, second, and third spectral responses.

3. An apparatus as claimed in Claim 2, characterised in that the radiation source (52) is a broadband source.

4. An apparatus as claimed in Claim 2 or 3, characterised in that the radiation source (52) is a light source.

5. An apparatus as claimed in any one of the preceding claims, characterised in that the sensor (10) includes a vibrating element (2) whose vibration is responsive to a measurand.

6. An apparatus as claimed in Claim 5, characterised in that the vibrating element (2) has a resonant frequency which is responsive to the measurand.

7. An apparatus as claimed in Claim 6, characterised by means (52, 55) for maintaining the vibrating element (2) in vibration at the resonant frequency.

8. An apparatus as claimed in any one of the preceding claims, characterised in that the processing means (54, 61-67) is arranged to form the first quotient as the product of a first constant and the first output divided by the sum of the first, second, and third outputs.

9. An apparatus as claimed in any one of the preceding claims, characterised in that the processing means (54, 61-67) is arranged to form the second quotient as the product of a second constant and the second output divided by the sum of the first, second, and third outputs.

10. An apparatus as claimed in any one of the preceding claims, characterised in that the processing means (54, 61-67) is arranged to provide a measure of the spectral distribution of radiation from the sensor (10) as a function of the first and second quotients.

11. An apparatus as claimed in Claim 10, characterised in that the processing circuit (54, 61-67) further comprises means (67) for deriving from the first and second quotients an angle signal representing an angle with reference to polar coordinates of a value whose cartesian coordinates comprise the first and second quotients.

FIG. I.

Output to oscilloscope etc.

850 nm laser

18

16 — 1300 nm laser
In GaAs detector

19 — 850 nm reject filter

12

17

3dB coupler

20

1300/850 wavelength
division multiplexer

15

single downlead fibre

10 — sensor device

8

FIG.2.

Signal
Generator

14

FIG.3.

FIG.4.

Drive light source

Control
Electronics

52

Optical fibre

55

51

53

10

54

Photodetectors

Processor

Resonant sensor

2

(Resonance frequency
varies with measurand)

FIG.5.

51

60a  53a  61

65

$\dfrac{x}{\Sigma}$

x

X

y

60b  53b  62

64

Z

$\Sigma$

60c  53c  63

Y

$\dfrac{y}{\Sigma}$

ø

66

67

FIG.6.

FIG.7.

Tristimulus detection response examples

FIG.8.

Tristimulus detection solution range

FIG.9.